# EUROPEAN PATENT APPLICATION

(11) **EP 3 761 399 A1**
(43) Date of publication of application: **06.01.2021**
(21) Application number: 19757163.1
(22) Date of filing: 16.01.2019
(51) Int. Cl.: H01M 2/16, H01M 10/052

(54) **SEPARATOR, METHOD FOR MANUFACTURING SAME, AND LITHIUM BATTERY INCLUDING SAME**

(30) Priority: 26.02.2018 KR 20180023100
(71) Applicant: Samsung SDI Co., Ltd., Gyeonggi-do 17084 (KR)
(72) Inventor: KIM, Yong Kyoung, Yongin-Si, Gyeonggi-do 17084 (KR); KIM, Ga In, Yongin-Si, Gyeonggi-do 17084 (KR); LEE, Jung Yoon, Yongin-Si, Gyeonggi-do 17084 (KR)
(74) Representative: Shearman, James Ward
(86) International application number: PCT/KR2019/000650
(87) International publication number: WO 2019/164130

(57) **Abstract**

Provided is a separator which includes a substrate and a coating layer disposed on at least one surface of the substrate, wherein the coating layer includes first organic particles, second organic particles, and inorganic particles; an average particle diameter of the first organic particles is larger than an average particle diameter of the second organic particles and the inorganic particles. The first organic particles protrude from a surface of the coating layer to a height of about 0.1 µm to about 0.5 µm and are distributed on the surface of the coating layer at an area ratio of about 5 % to about 15 % of a surface area of the coating layer. A weight ratio of the organic particles to the inorganic particles in the coating layer is about 20:80 to about 40:60. When the separator is used, improved adhesion to electrodes, heat resistance, insulating properties, and air permeability may be achieved, and lifetime characteristics of a lithium battery including the separator may be improved.

## Description

### TECHNICAL FIELD

The present disclosure relates to a separator, a method of manufacturing the separator, and a lithium battery including the separator.

### BACKGROUND ART

In accordance with trends towards small-sized, high-performance devices, smaller, more lightweight lithium batteries are desired. Meanwhile, the discharge capacity, energy density, and cycle characteristics of lithium batteries are becoming important for electric vehicle applications. To satisfy these demands, there is a need for lithium batteries having high discharge capacity per unit volume, high energy density, and good lifetime characteristics.

A separator may be positioned between a cathode and an anode to prevent short circuit in a lithium battery. An electrode assembly, which includes the cathode, the anode, and the separator between the cathode and the anode, may be wound in the form of a jelly roll and then roll-pressed to improve adhesion between the separator and the electrodes in the electrode assembly.

Olefin polymers are widely used in separators for lithium batteries. Olefin polymers have good flexibility, but tend to be limited by insufficient impregnation of liquid electrolyte due to their hydrophobic characteristics, and are prone to battery short circuit due to thermal shrinkage at high temperatures of 100 °C or higher.

To solve these problems, a separator manufactured by coating a ceramic material on a surface of a porous olefin polymer substrate has been suggested to provide improved separator strength and heat resistance. However, such ceramic-coated separators may have poor adhesion to the cathode and anode, and may easily be deformed due to volume change of the battery during charging and discharging.

Thus, to improve adhesion between the ceramic-coated separator and the cathode and anode, a separator further including a binder on the ceramic coating has been suggested. However, a separator including a binder on the ceramic coating may have increased internal resistance due to reduced porosity, as well as an increased thickness, leading to swelling of the binder in liquid electrolyte and a higher chance of lithium battery deterioration.

Therefore, a separator capable of overcoming the drawbacks of the related art, having a thin thickness, improved adhesion to electrodes, improved heat resistance, improved insulating properties, and improved air permeability is desired.

### DESCRIPTION OF EMBODIMENTS

### TECHNICAL PROBLEM

Provided is a separator having improved adhesion to electrodes, improved heat resistance, improved insulating properties, and improved air permeability.

Provided is a method of manufacturing the separator.

Provided is a lithium battery including the separator.

### TECHNICAL SOLUTION TO PROBLEM

According to an aspect of the present disclosure,

a separator includes a substrate and a coating layer disposed on at least one surface of the substrate,

wherein the coating layer includes first organic particles, second organic particles, and inorganic particles;

an average particle diameter of the first organic particles is larger than an average particle diameter of the second organic particles and an average particle diameter of the inorganic particles;

the first organic particles protrude from a surface of the coating layer at a height of about 0.1 µm to about 0.5 µm and are distributed on the surface of the coating layer at an area ratio of about 5 % to about 15 % of a surface area of the coating layer; and

a weight ratio of the organic particles to the inorganic particles in the coating layer is in a range of about 20:80 to about 40:60.

According to another aspect the present disclosure,
a method of manufacturing the separator includes the separator:
(a) preparing a slurry including first organic particles, second organic particles, and inorganic particles; and
(b) coating and drying the slurry on at least one surface of a substrate.

According to another aspect of the present disclosure, a lithium battery includes
a cathode;
an anode; and
the separator disposed between the cathode and the anode.

### ADVANTAGEOUS EFFECTS OF DISCLOSURE

According to an aspect of one or more embodiments of the present disclosure, when a separator including a coating layer of a novel structure is used, the separator may have improved adhesion to electrodes, heat resistance, insulating properties, and air permeability, and lifetime characteristics of a lithium battery including the separator may be improved.

### BRIEF DESCRIPTION OF DRAWINGS

FIG. 1 is a schematic view of a lithium polymer battery according to an embodiment;
FIG. 2 is a schematic view of a coating layer of a separator according to an embodiment;
FIG. 3 is a scanning electron microscope (SEM) image of a surface of the separator according to an embodiment;
FIG. 4 is an SEM image of a cross-section of the separator according to an embodiment;
FIG. 5 shows the results of thermomechanical analysis (TMA) performed on a separator prepared in Preparation Example 1 and a polyethylene porous substrate;
FIG. 6 shows the results of shut down and melt down measurement performed on the separators prepared in Preparation Examples 1 and 5 and the polyethylene porous substrate; and
FIG. 7 shows the results of charging/discharging cycles performed on lithium batteries prepared in Example 1 and Comparative Example 4.

### EXPLANATION OF REFERENCE NUMERALS DESIGNATING THE MAJOR ELEMENTS OF THE DRAWINGS

100: a lithium battery 116: a cathode
117: an anode 118: a separator
10: a coating layer of the separator 20: first organic particles
30: second organic particles 40: inorganic particles

### BEST MODE

Hereinafter, a separator, a method of preparing the separator, and a lithium battery including the separator, according to one or more embodiments of the present disclosure, will be described in detail. These embodiments are provided only for illustrative purposes, and are not intended to limit the scope of the embodiments of the present disclosure.

"Average particle diameter" of a particles in the specification is for example a median particle diameter (D50). The median particle diameter (D50) corresponding to a particle size D50 of the particle, is, for example, the particle size at a cumulative volume of 50% counted from the side of a particle with a smaller particle size in a particle size distribution measured by the laser diffraction method using particles. The average particle diameter can be measured by laser diffraction method.

### [Separator]

According to one or more embodiments, a separator includes a substrate and a coating layer on at least one surface of the substrate, wherein the coating layer includes first organic particles, second organic particles, and inorganic particles; an average particle diameter of the first organic particles is larger than an average particle diameter of the second organic particles and the inorganic particles; the first organic particles are distributed on a surface area of the coating layer corresponding to about 5 % or greater to about 15 % or less of a total surface area of the coating layer; and a weight ratio of the organic particles to the inorganic particles in the coating layer is in a range of about 20:80 to about 40:60.

The separator according to an embodiment of the present disclosure may increase adhesion between the separator and electrodes and may have excellent heat resistance, insulating properties, and air permeability without a separate adhesive layer by including first organic particles functioning as an adhesion and second organic particles functioning as a filler in the coating layer.

In the separator according to one or more embodiments of the present disclosure, the substrate may be a porous substrate. The porous substrate may be a porous film including polyolefin. Polyolefin may have a good short-circuit prevention effect and may improve battery safety with a shutdown effect. In some embodiments, the porous substrate may be a film formed of a resin, for example, polyolefin such as polyethylene, polypropylene, polybutene, polyvinyl chloride, a mixture thereof, or a copolymer thereof, but embodiments are not limited thereto, and the porous substrate may be any porous film available in the art. For example, the porous substrate may be a porous film formed of a polyolefin resin; a porous membrane woven from polyolefin fibers; a nonwoven fabric including polyolefin; or an aggregate of insulating material particles. For example, the porous membrane including the polyolefin may be compatible with a binder solution having favorable coating properties to form the coating layer on the substrate, resulting in a decreased thickness of the separator, an increased proportion of active material in the battery, and an increased capacity per unit volume.

In some embodiments, the polyolefin used as a material in the porous substrate may be a homopolymer such as polyethylene or polypropylene, a copolymer thereof, or a mixture thereof. The polyethylene may be a low-density polyethylene, a medium-density polyethylene, or a high-density polyethylene, and the high-density polyethylene may be used to provide increased mechanical strength. Also, a mixture of at least two polyethylenes may be used to provide increased flexibility. The polymerization catalyst used in preparation of the polyethylene is not particularly limited, but the polymerization catalyst may be a Ziegler-Natta catalyst, a Phillips catalyst, or a metallocene catalyst. To ensure both mechanical strength and high permeability, the polyethylene may have a weight average molecular weight of about 100,000 to about 12,000,000, and in some embodiments, about 200,000 to about 3,000,000. The polypropylene may be a homopolymer, a random copolymer, or a block copolymer, which may be used alone or in combination of at least two polymers. Also, the polymerization catalyst is not particularly limited but may be a Ziegler-Natta catalyst or a metallocene catalyst. Also, stereoregularity of the polyethylene may not be limited, but the polyethylene may be isotactic, syndiotactic, or atactic polyethylene. In some embodiments, additives such as polyolefins, except for polyethylene and polypropylene, and an anti-oxidant may be added to the polyolefin as long as they do not affect the features of embodiments of the present disclosure.

In some embodiments, the porous substrate may be a multilayer substrate including at least two layers formed of polyolefin such as polyethylene or polypropylene. In some embodiments, the porous substrate may include mixed multiple layers and may be, for example, a 2-layer separator including polyethylene/polypropylene layers, a 3-layer separator including polyethylene/polypropylene/polyethylene layers, or a 3-layer separator including polypropylene/polyethylene/polypropylene layers, but embodiments are not limited thereto, and any material and structure available for porous substrates in the related art may be used.

In some embodiments, the porous substrate may include a diene polymer prepared by polymerizing a monomer composition including a diene monomer. The diene monomer may be a conjugated diene monomer or a non-conjugated diene monomer. For example, the diene monomer may include at least one selected from the group consisting of 1,3-butadiene, isoprene, 2-chloro-1,3-butadiene, 2,3-dimethyl-1,3-butadiene, 2-ethyl-1,3-butadiene, 1,3-pentadiene, chloroprene, vinylpyridine, vinylnorbornene, dicyclopentadiene, and 1,4-hexadiene, but embodiments are not limited thereto, and any diene monomer available in the art may be used.

In the separator, a thickness of the porous substrate may be in a range of about 1 µm to about 100 µm. For example, a thickness of the porous substrate may be in a range of about 1 µm to about 30 µm. For example, a thickness of the porous substrate may be in a range of about 5 µm to about 20 µm. For example, a thickness of the porous substrate may be in a range of about 5 µm to about 15 µm. For example, a thickness of the porous substrate may be in a range of about 5 µm to about 10 µm. When a thickness of the porous substrate is less than about 1 µm, it may be difficult to maintain the mechanical properties of the separator. When a thickness of the porous substrate is greater than about 100 µm, the lithium battery may have increased internal resistance.

In the separator, a porosity of the porous substrate may be in a range of about 5 % to about 95 %. When a porosity of the porous substrate is less than about 5 %, the lithium battery may have increased internal resistance. When a porosity of the porous substrate is greater than about 95 %, it may be difficult to maintain the mechanical properties of the porous substrate.

In the separator, a pore size of the porous substrate may be in a range of about 0.01 µm to about 10 µm. The pore size and surface area of the porous substrate can be for example by gas adsorption method (e.g., BET method). For example, a pore size of the porous substrate in the separator may be in a range of about 0.01 µm to about 5 µm. For example, a pore size of the porous substrate in the separator may be in a range of about 0.01 µm to about 1 µm. When a pore size of the porous substrate is less than about 0.01 µm, the lithium battery may have increased internal resistance. When a pore size of the porous substrate is greater than about 10 µm, it may be difficult to maintain the mechanical properties of the porous substrate.

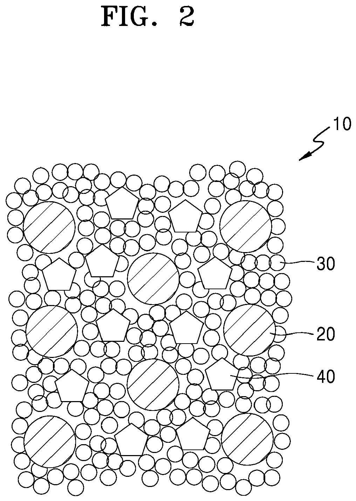

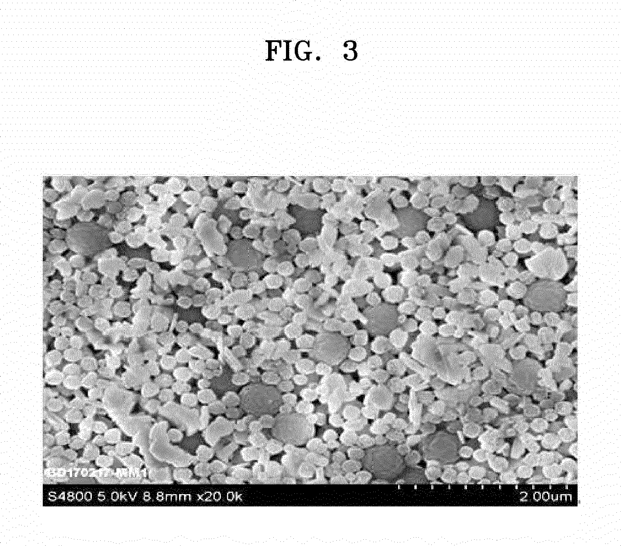

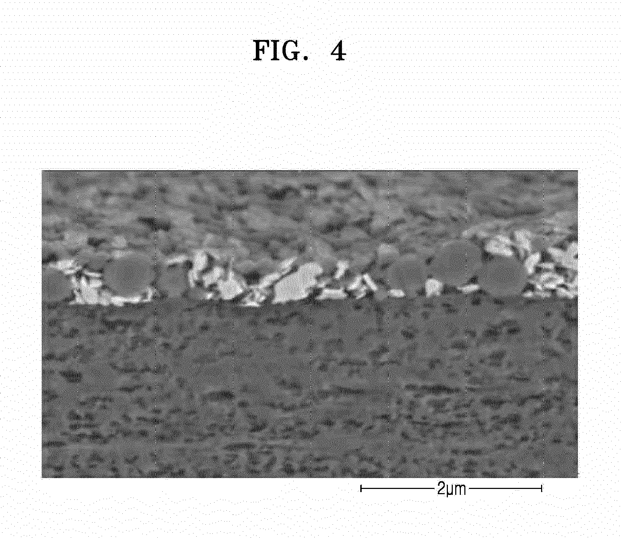

The coating layer may include the first organic particles, the second organic particles, and the inorganic particles. In particular, FIG. 2 is a schematic view of the coating layer of the separator according to an embodiment, and FIGS. 3 and 4 are scanning electron microscope (SEM) images of a surface and a cross-section of the separator according to an embodiment, respectively.

As shown in FIGS. 2 to 4, first organic particles 20, second organic particles 30, and inorganic particles 40 may be mixed in a coating layer 10. That is, the coating layer 10 in the separator according to an embodiment of the present disclosure may include first organic particles 20, second organic particles 30, and inorganic particles 40 mixed together in a layer, not independently as separate layers. Here, the first organic particles may function as an electrode adhesive that enhances the adhesive force between the separator and an electrode. The first organic particles may protrude at least to a predetermined height from a surface of the porous coating layer so that they form an embossed structure.

That is, the first organic particles may protrude as an embossed structure from the surface of the porous coating layer to thereby act as an electrode adhesive. To this end, an average particle diameter of the first organic particles may be larger than an average particle diameter of the second organic particles and the inorganic particles, and the first organic particles may protrude to a height of about 0.1 µm to about 0.5 µm from the surface of the coating layer. For example, the first organic particles may protrude to a height of about 0.1 µm to about 0.4 µm from the surface of the coating layer. In some embodiments, the first organic particles may protrude to a height of about 0.2 µm to about 0.3 µm from the surface of the coating layer. To this end, the first organic particles may have an average particle diameter about 1.1 times to about 5 times larger than that of the second organic particles and the inorganic particles.

For example, an average particle diameter of the first organic particles may be in a range of about 0.3 µm to about 0.7 µm. For example, an average particle diameter of the first organic particles may be in a range of about 0.3 µm to about 0.5 µm. For example, an average particle diameter of the first organic particles may be in a range of about 0.4 µm to about 0.5 µm. When an average particle diameter of the first organic particles is smaller than about 0.3 µm, the first organic particles may not protrude from the surrounding surface of the coating layer to enable adhesion to the electrode, or may not provide air permeability, thereby increasing battery resistance. Also, when an average particle diameter of the first organic particles is greater than about 0.7 µm, an adhesion area between the electrode and the separator increases, and a thickness of the separator after coating may be too thick, which may increase resistance of the lithium battery.

The first organic particles used in the coating layer may be any adhesive organic particles in the art. In this regard, the first organic particles may have a glass transition temperature (T_{g}) lower than the temperature at which lamination of electrode assemblies is performed. For example, a glass transition temperature (T_{g}) of the first organic particles may be in a range of about 50 °C to about 70 °C. The glass transition temperature (T_{g}) of the organic particles can be measured for example by DSC (Differential Scanning Calorimeter). When the glass transition temperature (T_{g}) of the first organic particles is above this range, side reactions of electrolyte may occur when the press temperature is increased to enhance the adhesion between the first organic particles and the electrodes. On the other hand, when the glass transition temperature (T_{g}) of the first organic particles is too low, the first organic particles may form a membrane during post-coating heated drying or product transfer, which may affect an assembly process due to the adhesion between the separators.

The first organic particles may have an appropriate degree of swelling in an electrolyte solution for use in a lithium battery. For example, the first organic particles may be spherical particles having a degree of swelling of about 70 % to about 800 % when left in an electrolyte solution at a temperature of about 50 °C to about 70 °C. Due to the swelling in the electrolyte solution, lithium ion migration resistance may decrease, and an area adhere to the electrode may increase. Also, in the slurry preparation, the first organic particles needs to be insoluble in a solvent or a dispersion solution and be maintained in particle form after coating of the slurry to inhibit reduction in air permeability of the separator.

Examples of the first organic particles may be polystyrene (PS), polyvinylidene fluoride (PVdF), polymethyl methacrylate (PMMA), polyacrylonitrile (PAN), polyvinylidene, polyvinyl acetate (PVA), polyethylene oxide (PEO), cellulose acetate, acrylate, and azodicarbonamide, but embodiments are not limited thereto.

The first organic particles may be single particle or secondary particles formed as aggregates of single particles.

The first organic particles may be distributed on a surface of the coating layer in an area ratio of about 5 % or greater to about 15 % or less with respect to a total surface area of the coating layer. For example, the first organic particles may be distributed on the surface of the coating layer in an area ratio of about 6 % to about 14 % with respect to the total surface area of the coating layer. For example, the first organic particles may be distributed on the surface of the coating layer in an area ratio of about 7 % to about 12 % with respect to the total surface area of the coating layer. When the area ratio of the first organic particles to the total surface area of the coating layer is less than about 5 %, the first organic particles may not exhibit electrode adhesion effects. When the area ratio of the first organic particles to the total surface area of the coating layer is greater than about 15%, heat resistance and cell performance of the battery may be deteriorated.

In one embodiment, the number of the first organic particles in about 13 µm × 9 µm of a surface area of the coating layer may be in a range of 20 to 100. For example, the number of the first organic particles in about 13 µm × 9 µm of a surface area of the coating layer may be in a range of 30 to 90. For example, the number of the first organic particles in about 13 µm × 9 µm of a surface area of the coating layer may be in a range of 40 to 80. When the number of the first organic particles in about 13 µm × 9 µm of a surface area of the coating layer is within these ranges, the lithium battery may have excellent adhesion to electrodes, heat resistance, and battery performance.

The second organic particles function as a filler, which may enable uniform film coating and may provide improved air permeability and insulating properties, as compared to an inorganic filler.

In particular, the second organic particles may act as a support in the separator. For example, when the separator is about to shrink at a high temperature, the second organic particles may exist between an inorganic filler and thus inhibit shrinkage of the separator. Also, when the coating layer on the separator includes the second organic particles, sufficient porosity may be ensured in the separator, and the separator may have improved heat-resistant characteristics. Therefore, when the separator includes a relatively small amount of a binder and a relatively large amount of the filler, the lithium battery including the separator may ensure improved safety.

An average particle diameter of the second organic particles may be in a range of about 0.15 µm to about 0.35 µm. For example, an average particle diameter of the second organic particles may be in a range of about 0.2 µm to about 0.3 µm. When an average particle diameter of the second organic particles is within these ranges, the second organic particles may form a thin coating layer having a uniform thickness, so that the separator may have a reduced thickness and an appropriate porosity.

An aspect ratio of the second organic particles may be in a range of about 1:0.5 to about 1:2. For example, an aspect ratio of the second organic particles may be in a range of about 1:0.7 to about 1:1.5. For example, an aspect ratio of the second organic particles may be in a range of about 1:0.8 to about 1:1.2. When an aspect ratio of the second organic particles is within these ranges, a mixing property with irregular inorganic particles may increase, and thus a coating layer having a uniform thickness may be formed, so that the separator may have a reduced thickness, an appropriate porosity, and heat resistance characteristics.

The second organic particles may be a cross-linked polymer. In some embodiments, the second organic particles may be a highly cross-linked polymer without a glass transition temperature (T_{g}). When such a highly cross-linked polymer is used, the separator may have improved heat resistance, so that shrinkage of the porous substrate at high temperatures may be effectively suppressed. Also, a thermal decomposition temperature of the second organic particles may be about 300 °C or higher. The thermal decomposition temperature (T_{c}) of the organic particles can be measured for example by TGA (Thermogravimetric analysis). For example, a thermal decomposition temperature of the second organic particles may be in a range of about 300 °C to about 500 °C. Here, the total amount of heat absorbed (i.e., endothermic calorific value) by the second organic particles during thermal decomposition may be about 250 J/g or greater.

The second organic particles may include, for example, an acrylate compound or derivatives thereof, a diallyl phthalate compound or derivatives thereof, a polyimide compound or derivatives thereof, a polyurethane compound or derivatives thereof, a copolymer of any of the above compounds, or a combination of any of the above compounds (including copolymers thereof), but embodiments are not limited thereto, and any material available as a filler in the art may be used. For example, the second organic particles may be cross-linked polystyrene particles or cross-linked polymethyl methacrylate particles.

The first organic particles or the second organic particles each independently may have a core-shell structure. For example, the first organic particles may have a core-shell structure. For example, the second organic particles may have a core-shell structure. For example, the first organic particles and the second organic particles may both have a core-shell structure.

The core-shell structure may include a core portion and a shell portion, and a weight of the shell portion may be about 50 weight% (wt%) based on a total weight of the core portion. The core portion may include the same compound used for the first organic particles or second organic particles as described above, and the shell portion may include a material capable of effecting battery shutdown and electrode adhesion functions by melting at a certain or predetermined temperature.

A material that may be included in the shell portion may be a thermoplastic resin having a melting point (Tₘ) of about 130 °C or lower. The melting point (Tₘ) of the thermoplastic resin can be measured for example by DSC (Differential Scanning Calorimeter). For example, the thermoplastic resin may be polyethylene (PE), polyvinyl chloride (PVC), polypropylene (PP), polystyrene (PS), polyacrylonitrile (PAN), styrene-acrylonitrile (SAN), acrylonitrile-butadiene-styrene (ABS), polymethylmethacrylate (PMMA), polytetrafluoroethylene (PTFE), or polychlorotrifluoroethylene (PCTFE).

When the second organic particles have a core-shell structure, the shell portion of the second organic particles having a melting point of about 130 °C or less is molten at temperatures of about 130 °C or higher, and the molten shell portion may coat the separator and provide a shutdown effect and an electrode adhesion effect.

A weight ratio of the first organic particles and the second organic particles in the coating layer may be in a range of about 30:70 to about 60:40. For example, a weight ratio of the first organic particles and the second organic particles may be in a range of about 30:70 to about 50:50. For example, a weight ratio of the first organic particles and the second organic particles may be in a range of about 40:60 to about 50:50. When a weight ratio of the first organic particles to the second organic particles is within these ranges, the battery may have improved heat resistance and improved cell performance due to a decrease in an interfacial resistance according to an increase in adhesion to electrodes.

An average particle diameter of the inorganic particles may be in a range of about 0.2 µm to about 0.4 µm. For example, an average particle diameter of the inorganic particles may be in a range of about 0.25 µm to about 0.4 µm. For example, an average particle diameter of the inorganic particles may be in a range of about 0.25 µm to about 0.35 µm. The inorganic particles may act as a filler, may enable a uniform thin film coating when mixed with the second organic particles, may improve the heat resistance of the separator, and may further reduce cell resistance.

The inorganic particles may be a metal oxide, a metalloid oxide, or a combination thereof. For example, the inorganic particles may be one or more selected from boehmite, alumina (Al₂O₃), BaSO₄, MgO, Mg(OH)₂, clay, silica (SiO₂), and TiO₂. The boehmite, alumina, or silica has a small particle size and thus is useful in preparation of a dispersion. For example, the inorganic particles may be AIO(OH), Al₂O₃, SiO₂, TiO₂, SnO₂, CeO₂, NiO, CaO, ZnO, MgO, ZrO₂, Y₂O₃, SrTiO₃, BaTiO₃, MgF₂, Mg(OH)₂, or a combination thereof.

The inorganic particles may be in sphere, plate, or fiber form, but embodiments are not limited thereto, and the inorganic particles may be in any form available in the art.

The inorganic particles in plate form may be, for example, boehmite, alumina, or magnesium hydroxide. In this case, reduction in the area of the separator at high temperature may further be inhibited, a relatively high porosity may be secured, and a lithium battery may exhibit improved characteristics in a penetration test.

When the inorganic particles are in plate or fiber form, an aspect ratio of the inorganic particles may be in a range of about 1:5 to about 1:100. For example, an aspect ratio of the inorganic particles may be in a range of about 1:10 to about 1:100. For example, an aspect ratio of the inorganic particles may be in a range of about 1:5 to about 1:50. For example, an aspect ratio of the inorganic particles may be in a range of about 1:10 to about 1:50.

When the inorganic particles are in plate form, a length ratio of the longer axis to the shorter axis on flat plane may be about 1 to about 3. For example, a length ratio of the longer axis to the shorter axis on flat plane may be about 1 to about 2. For example, a length ratio of the longer axis to the shorter axis on flat plane may be about 1. The aspect ratio and the length ratio of the longer axis to the shorter axis may be measured by scanning electron microscopy (SEM). When the aspect ratio and the length ratio of the longer axis to the shorter axis are within the above ranges, shrinkage of the separator may be inhibited, a relatively improved porosity may be secured, and a lithium battery may have improved penetration characteristics.

When the inorganic particles are in plate form, an average angle of inorganic particle plate surfaces with respect to one surface of the porous substrate may be about 0 degree to about 30 degrees. For example, the average angle of inorganic particle plate surfaces with respect to one surface of the porous substrate may converge to zero degree. That is, one surface of the porous substrate and the inorganic particle plate surfaces may be parallel. For example, when the average angle of inorganic particle plate surfaces with respect to one surface of the porous substrate is within the above range, thermal shrinkage of the porous substrate may be effectively prevented, and thus a separator with a reduced shrinkage may be provided.

A weight ratio of the first and the second organic particles to the inorganic particles in the coating layer may be in a range of about 20:80 to about 80:20. For example, a weight ratio of the first and the second organic particles to the inorganic particles in the coating layer may be in a range of about 20:80 to about 40:60. For example, a weight ratio of the first and the second organic particles to the inorganic particles may be in a range of about 30:70 to about 40:60. For example, a weight ratio of the first and the second organic particles to the inorganic particles may be in a range of about 30:70 to about 50:50. When a weight ratio of the first and the second organic particles to the inorganic particles in the coating layer is within these ranges, the separator may have improved heat resistance, and cell performance may improve due to a decrease in an interfacial resistance according to an increase in adhesion to electrodes.

A thickness of the coating layer may be in a range of about 0.3 µm to about 5.0 µm. That is, when the average particle sizes and the weight ratio of the first organic particles, the second organic particles, and the organic particles are within the predetermined ranges described above, the coating layer of the separator according to embodiments of the present disclosure may have improved adhesion to the electrodes and improved binding strength to the substrate, and may also be formed to have a uniform and thin structure. For example, a thickness of the coating layer may be in a range of about 0.3 µm to about 4.0 µm. For example, a thickness of the coating layer may be in a range of about 0.3 µm to about 3.0 µm. For example, a thickness of the coating layer may be in a range of about 0.3 µm to about 2.0 µm. When a thickness of the coating layer is within these ranges, the separator including the coating layer may provide improved adhesion to the electrodes and improved heat resistance and insulating properties. In particular, the coating layer may be formed to have a thickness of about 1 µm or less, and the entire thickness of the separator and the resulting thickness of an electrode assembly including the separator may be reduced, thereby increasing the capacity per volume of the battery.

In some embodiments, the coating layer may further include third organic particles having a shutdown function. That is, the third organic particles may be melted at a predetermined temperature and thus clog pores in the separator, thereby blocking current flow. The term "shutdown" may refer to clogging of pores in the separator in response to a temperature rise of a lithium battery to thereby block or reduce migration of lithium ions to prevent or reduce thermal runaway. The term "shutdown temperature" may refer to the temperature at which the shutdown occurs or is configured to occur.

In one or more embodiments of the present disclosure, when a lithium battery including the separator is exposed to a high temperature, the third organic particles may first melt down before thermal runaway occurs, forming a polymer thin film on at least one surface of the substrate of the separator or permeating into the pores in the substrate of the separator to disrupt migration and transport of the electrolyte solution, thus blocking or limiting current flow and improving safety of the lithium battery.

A melting point (Tₘ) of the third organic particles may be in a range of about 80 °C to about 130 °C. For example, a melting point (Tₘ) of the third organic particles may be in a range of about 90 °C to about 120 °C. When the melting point of the third organic particles is lower than the shutdown temperature of the porous substrate, the pores of the porous substrate may be blocked before thermal runaway occurs in the lithium battery, and thus the lithium battery may have further improved safety.

An average particle diameter of the third organic particles is not particularly limited as long as the third organic particles do not block the pores in the separator during preparation of the separator. The average particle diameter of the third organic particles may be larger than the pore size of the porous substrate of the separator. For example, an average particle diameter of the third organic particles is in a range of about 0.1 µm to about 0.5 µm. For example, an average particle diameter of the third organic particles is in a range of about 0.1 µm to about 0.4 µm. For example, an average particle diameter of the third organic particles is in a range of about 0.2 µm to about 0.3 µm.

In some embodiments, the third organic particles may be natural or artificial wax, a (low-melting point) polymer (such as polyolefin), a mixture thereof, polystyrene, or an acrylate such as polymethylmethylacrylate, and in this case, the third organic particles may be appropriately chosen to block the pores of the separator by being melted at a target shutdown temperature to prevent further lithium ion transport. For example, the third organic particles may be formed of polyethylene wax or an acrylate.

In some embodiments, the coating layer may further include an organic binder polymer to enhance the binding of the second organic particles and the inorganic particles functioning as a filler. Examples of the organic binder polymer may be polyvinylidene fluoride-co-hexafluoropropylene, polyvinylidene fluoride-co- trichloroethylene, polymethylmethacrylate, polybutylacrylate, polyacrylonitrile, polyvinylpyrrolidone, polyvinylacetate, polyvinyl alcohol, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, polyacrylamide, or a mixture thereof, but embodiments are not limited thereto.

A solvent of the organic binder polymer may have a solubility index similar to that of the organic binder polymer and may have a low boiling point. These solubility properties may enable uniform mixing and easy removal of the solvent. Examples of the solvent may be acetone, tetrahydrofuran, methylene chloride, chloroform, dimethylformamide, N-methyl-2-pyrrolidone, cyclohexane, water, or a mixture thereof.

Also, the organic binder polymer in the coating layer may be an aqueous binder having a glass transition temperature (T_{g}) of about -50 °C or higher, and may be present as particles after coating and drying. For example, the organic binder polymer may include acrylate or styrene. When the aqueous binder is used, a coating layer may have having high adhesion and improved air permeability.

The coating layer may be positioned on one surface or two surfaces of the substrate. For example, the coating layer may be positioned only on one surface of the substrate and may not be positioned on the other surface of the coating layer. For example, the coating layer may be positioned on both surfaces of the substrate. When the coating layer is positioned on both surfaces of the substrate, adhesion between the binder and an electrode active material layer may further improve, which may prevent volume changes of the lithium battery. Also, the coating layer may have a single-layer structure or a multilayer structure. The multilayer structure may be a 2-layer structure, a 3-layer structure, or a 4-layer structure, but embodiments are not limited thereto, and any structure may be chosen according to desired characteristics of the separator.

The coating layers positioned on both surfaces of the separator may have the same composition. When the coating layers having the same composition are positioned on opposite surfaces of the separator, the same adhesive force may be applied to the corresponding electrode active material layers on both one and the other surfaces of the separator, such that volume changes of the lithium battery may be uniformly suppressed.

### [Separator Preparation Method]

According to another aspect of one or more embodiments, a method of preparing the separator includes: (a) preparing a slurry including first organic particles, second organic particles, and inorganic particles; and (b) coating and drying the slurry on at least one surface of a substrate.

In step (b), the slurry may be coated on both surfaces of the substrate. For example, the slurry may be coated on both surfaces of the substrate at the same time.

In some embodiments, the slurry may further include third organic particles having a melting point (Tₘ) in a range of about 80 °C to about 130 °C.

The separator may be formed by coating the slurry on the substrate. The method of coating the slurry is not particularly limited, and any coating method available in the art may be used. For example, the separator may be formed by printing, compression, press fitting, roller coating, blade coating, brush coating, dipping, spraying, or casting.

In one or more embodiments, immediately after or at substantially the same time as coating of the slurry for forming the porous coating layer, an aqueous dispersion solution of an aqueous binder compound may be coated on the porous coating layer to form an adhesive layer. In some embodiments, a dispersion medium for the dispersion solution for forming the adhesive layer may be water.

In one or more embodiments, the drying may be performed using any method available in the art. For example, the drying may be performed using a batch method or in a continuous manner using an oven or a heating chamber in a temperature range in consideration of the vapor pressure of the solvent used in the slurry. The drying may be to remove most or substantially all of the solvent from the slurry. The drying time may be selected to be as short as possible in terms of productivity. For example, the drying may be performed for about 1 minute or less, or about 30 seconds or less.

A peel strength between the separator and the electrode may be about 0.01 N/m to about 3.0 N/m. For example, a peel strength between the separator and the electrode may be about 0.1 N/m to about 2.0 N/m. For example, a peel strength between the separator and the electrode may be about 0.2 N/m to about 1.5 N/m. For example, a peel strength between the separator and the electrode may be about 0.4 N/m to about 1.5 N/m. When a peel strength is within these ranges, volume change of the lithium battery may be effectively suppressed.

An air permeability of the separator may be in a range of about 50 seconds/100 cc to about 300 seconds/100 cc. For example, an air permeability of the separator may be in a range of about 100 seconds/100 cc to about 200 seconds/100 cc. For example, an air permeability of the separator may be in a range of about 130 seconds/100 cc to about 180 seconds/100 cc. For example, an air permeability of the separator may be in a range of about 130 seconds/100 cc to about 150 seconds/100 cc. When a peel strength is within these ranges, an increase in internal resistance of the lithium battery may be effectively suppressed.

A film resistance after a pressing process of the separator and the electrode may be in a range of about 0.1 Ω to about 3 Ω. For example, a film resistance after a pressing process of the separator and the electrode may be in a range of about 0.3 Ω to about 3 Ω. For example, a film resistance after a pressing process of the separator and the electrode may be in a range of about 0.5 Ω to about 0.8 Ω. When a film resistance is within these ranges, an increase in resistance of the lithium battery may be suppressed, and thus rate characteristics and lifetime characteristics of the battery may be effectively improved.

A breakdown voltage (BDV) of the separator may be in a range of about 0.5 kV to about 3.0 kV. For example, a BDV of the separator may be in a range of about 0.7 kV to about 2.5 kV. For example, a BDV of the separator may be in a range of about 1.0 kV to about 2.0 kV. When a BDV is within these ranges, the risk of a short-circuit failure and an open circuit voltage (OCV) drop caused by a foreign substance in the battery may be decreased.

A thermal shrinkage (%) of the separator may be about 10 % or lower at a temperature in a range of about 50 °C to about 150 °C. For example, a thermal shrinkage (%) of the separator may be about 10 % or lower at a temperature in a range of about 50 °C to about 150 °C in both the MD and TD. For example, a thermal shrinkage (%) of the separator may be about 1 % to about 8 % at a temperature in a range of about 50 °C to about 150 °C in both the MD and TD. For example, a thermal shrinkage (%) of the separator may be about 1 % to about 5 % at a temperature in a range of about 50 °C to about 150 °C in both the MD and TD. When a thermal shrinkage (%) of the separator is within these ranges at a temperature in a range of about 50 °C to about 150 °C, thermal shrinkage characteristics of the separator may be suppressed, and thus rate characteristics and lifetime characteristics of the battery may be effectively improved.

The separator according to an embodiment of the present disclosure prepared using the preparation method described above may be used as a separator of a lithium battery.

### [Lithium battery]

According to another aspect of one or more embodiments, a lithium battery includes a cathode; an anode; and the separator according to any of the embodiments between the cathode and the anode. By the inclusion of the separator according to any of the embodiments, the lithium battery may have the increase adhesion between the electrodes (the cathode and the anode) and the separator, and volume changes of the lithium battery during charging and discharging may be suppressed. In this regard, a potential uniformity caused by a uniform interval between the cathode and the anode due to the adhesion may be provided to the battery, and thus reliability of the battery may be improved. Accordingly, the lithium battery may be prevented from deterioration caused due to such volume changes of the lithium battery, and thus have improved stability and lifetime characteristics.

In some embodiments, the lithium battery may be manufactured in the following manner.

First, an anode active material layer, a conducting agent, a binder, and a solvent may be mixed together to prepare an anode active material composition. The anode active material composition may be directly coated on a metallic current collector to form an anode plate. In some embodiments, the anode active material composition may be cast on a separate support to form an anode active material film. The anode active material film may then be separated from the support and laminated on a metallic current collector to thereby form an anode plate. The anode is not limited to this form and may have any form.

The anode active material may be a non-carbonaceous material. For example, the anode active material may include at least one selected from a lithium metal, a metal alloyable with lithium, alloys of a metal alloyable with lithium, oxides of a metal alloyable with lithium, and combinations thereof.

Non-limiting examples of the metal alloyable with lithium include silicon (Si), tin (Sn), aluminum (Al), germanium (Ge), lead (Pb), bismuth (Bi), antimony (Sb), a Si-Y alloy (where Y is an alkali metal, an alkali earth metal, a Group 13 to Group 16 element, a transition metal, a rare earth element, or a combination thereof, and Y is not Si), and a Sn-Y alloy (where Y is an alkali metal, an alkali earth metal, a Group 13 to Group 16 element, a transition metal, a rare earth element, or combinations thereof, and Y is not Sn). In some embodiments, Y may be or include magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), germanium (Ge), phosphorus (P), arsenic (As), antimony (Sb), bismuth (Bi), sulfur (S), selenium (Se), tellurium (Te), polonium (Po), or a combination thereof.

In some embodiments, examples of the transition metal oxide may be a lithium titanium oxide, a vanadium oxide, and a lithium vanadium oxide.

In some embodiments, examples of the non-transition metal oxide may be SnO₂ and SiOₓ (where 0<x<2).

In some embodiments, the anode active material may be at least one selected from Si, Sn, Pb, Ge, Al, SiOₓ, (where 0<x≤2), SnO_{y} (where 0<y≤2), Li₄Ti₅O₁₂, TiO₂, LiTiO₃, and Li₂Ti₃O₇, but embodiments are not limited thereto, and any non-carbonaceous anode active material available in the art may be used.

In some embodiments, for example, the anode active material may be a composite of the non-carbonaceous anode active material and a carbonaceous material and may further include a carbonaceous anode active material in addition to the non-carbonaceous material.

The carbonaceous material may be crystalline carbon, amorphous carbon, or a mixture thereof. Examples of the crystalline carbon may be graphite, such as natural graphite or artificial graphite that are in non-shaped, plate, flake, spherical, or fibrous form. Examples of the amorphous carbon may be soft carbon (carbon sintered at low temperatures), hard carbon, meso-phase pitch carbides, and sintered cokes.

Examples of the conducting agent may be natural graphite, artificial graphite, carbon black, acetylene black, Ketjen black, carbon fibers, a powder or fibers of a metal such as copper, nickel, aluminum, or silver, or a conductive material such as polyphenylene derivatives, which may be used alone or in combination of at least two selected therefrom. However, embodiments are not limited thereto, and any material available as a conducting agent in the art may be used. The examples of the crystalline carbonaceous material may be used as an additional conducting agent.

In some embodiments, for example, the binder may be a vinylidene fluoride/hexafluoropropylene copolymer, polyvinylidene fluoride, polyacrylonitrile, polymethylmethacrylate, polytetrafluoroethylene, carboxylmethyl cellulose, polyacrylamide, polyacrylic acid, polyvinyl alcohol, polyacetate, polyvinylpyrrolidone and a mixture thereof, or a styrene butadiene rubber polymer, but embodiments are not limited thereto, and any material available as a binder in the art may be used.

Examples of the solvent may be N-methyl-pyrrolidone, acetone, or water, which may be used alone or in combination, but embodiments are not limited thereto, and any material available as a solvent in the art may be used.

The amounts of the anode active material, the conducting agent, the binder, and the solvent may be in ranges that are commonly used in lithium batteries. In some embodiments, at least one of the conducting agent, the binder, and the solvent may be omitted according to the use and structure of the lithium battery.

The composition of the binder used in the preparation of the anode may be the same as included in the coating layer of the separator.

Next, a cathode active material, a conducting agent, a binder, and a solvent may be mixed together to prepare a cathode active material composition. The cathode active material composition may be directly coated on a metallic current collector and dried to form a cathode plate. In some embodiments, the cathode active material composition may be cast on a separate support to form a cathode active material film. This cathode active material film may then be separated from the support and laminated on a metallic current collector to thereby form a cathode plate.

The cathode active material may include at least one selected from lithium cobalt oxide, lithium nickel cobalt manganese oxide, lithium nickel cobalt aluminum oxide, lithium iron phosphate, and lithium manganese oxide, but embodiments are not limited thereto, and any cathode active material available in the art may be used.

In some embodiments, for example, the cathode active material may be at least one compound represented by one of the following formulae: LiₐA_{1-b}B'_{b}D'₂ (where 0.90 ≤ a ≤ 1.8 and 0 ≤ b ≤ 0.5); LiₐE_{1-b}B'_{b}O_{2-c}D'_{c} (where 0.90 ≤ a ≤ 1.8, 0 ≤ b ≤ 0.5, and 0 ≤ c ≤ 0.05); LiE_{2-b}B'_{b}O_{4-c}D'_{c} (where 0 ≤ b ≤ 0.5 and 0 ≤ c ≤ 0.05); LiₐNi_{1-b-c}Co_{b}B'_{c}D'_{α} (where 0.90 ≤ a ≤ 1.8, 0 ≤ b ≤ 0.5, 0 ≤ c ≤ 0.05, and 0 < α ≤ 2); LiₐNi_{1-b-c}Co_{b}B'_{c}O_{2-α}F'_{α} (where 0.90 ≤ a ≤ 1.8, 0 ≤ b ≤ 0.5, 0 ≤ c ≤ 0.05, and 0 < α < 2); LiₐNi_{1-b-c}Co_{b}B'_{c}O_{2-α}F'₂ (where 0.90 ≤ a ≤ 1.8, 0 ≤ b ≤ 0.5, 0 ≤ c ≤ 0.05, and 0 < α < 2); LiₐNi_{1-b-c}Mn_{b}B'_{c}D'_{α} (where 0.90 ≤ a ≤ 1.8, 0 ≤ b ≤ 0.5, 0 ≤ c ≤ 0.05, and 0 < α ≤ 2); LiₐNi_{1-b-c}Mn_{b}B'_{c}O_{2-α}F'_{α} (where 0.90 ≤ a ≤ 1.8, 0 ≤ b ≤ 0.5, 0 ≤ c ≤ 0.05, and 0 < α < 2); LiₐNi_{1-b-c}Mn_{b}B'_{c}O_{2-α}F'₂ (where 0.90 ≤ a ≤ 1.8, 0 ≤ b ≤ 0.5, 0 ≤ c ≤ 0.05, and 0 < α < 2); LiₐNi_{b}E_{c}G_{d}O₂ (where 0.90 ≤ a ≤ 1.8, 0 ≤ b ≤ 0.9, 0 ≤ c ≤ 0.5, and 0.001 ≤ d ≤ 0.1);LiₐNi_{b}Co_{c}Mn_{d}GeO₂ (where 0.90 ≤ a ≤ 1.8, 0 ≤ b ≤ 0.9, 0 ≤ c ≤ 0.5, 0 ≤ d <0.5, and 0.001 ≤ e ≤ 0.1); LiₐNiG_{b}O₂ (where 0.90 ≤ a ≤ 1.8 and 0.001 ≤ b ≤ 0.1); LiₐCoG_{b}O₂ (where 0.90 ≤ a ≤ 1.8 and 0.001 ≤ b ≤ 0.1); LiₐMnG_{b}O₂ (where 0.90 ≤ a ≤ 1.8 and 0.001 ≤ b ≤ 0.1); LiₐMn₂G_{b}O₄ (where 0.90 ≤ a ≤ 1.8 and 0.001 ≤ b ≤ 0.1); QO₂; QS₂; LiQS₂; V₂O₅; LiV₂O₅; Lil'O₂; LiNiVO₄; Li_{(3-f)}J₂(PO₄)₃ (where 0 ≤ f ≤ 2); Li_{(3-f)}Fe₂(PO₄)₃ (where 0 ≤ f ≤ 2); and LiFePO₄.

In the formulae above, A may be nickel (Ni), cobalt (Co), manganese (Mn), or a combination thereof; B' may be aluminum (Al), nickel (Ni), cobalt (Co), manganese (Mn), chromium (Cr), iron (Fe), magnesium (Mg), strontium (Sr), vanadium (V), a rare earth element, or a combination thereof; D' may be (O), fluorine (F), sulfur (S), phosphorus (P), or a combination thereof; E may be cobalt (Co), manganese (Mn), or a combination thereof; F' may be fluorine (F), sulfur (S), phosphorus (P), or a combination thereof; G may be aluminum (Al), chromium (Cr), manganese (Mn), iron (Fe), magnesium (Mg), lanthanum (La), cerium (Ce), strontium (Sr), vanadium (V), or a combination thereof; Q may be titanium (Ti), molybdenum (Mo), manganese (Mn), or a combination thereof; I' may be chromium (Cr), vanadium (V), iron (Fe), scandium (Sc), yttrium (Y), or a combination thereof; and J may be vanadium (V), chromium (Cr), manganese (Mn), cobalt (Co), nickel (Ni), copper (Cu), or a combination thereof.

In some embodiments, the cathode active material may have a surface coating layer (hereinafter, also referred to as "coating layer"). In some embodiments, a mixture of a compound without a coating layer and a compound having a coating layer, the compounds being selected from the compounds listed above, may be used. In some embodiments, the coating layer may include at least one compound selected from an oxide, a hydroxide, an oxyhydroxide, a oxycarbonate, and a hydroxycarbonate of a coating element. In some embodiments, the compounds for the coating layer may be amorphous or crystalline. In some embodiments, the coating element for the coating layer may be or include magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. In some embodiments, the coating layer may be formed using any method that does not adversely affect the physical properties of the cathode active material when a compound of the coating element is used. For example, the coating layer may be formed using a spray coating method or a dipping method. The coating methods may be well understood by one of ordinary skill in the art, and thus a detailed description thereof will be omitted.

For example, the cathode active material may be LiNiO₂, LiCoO₂, LiMnₓO₂ₓ (where x=1 or 2), LiNi₁₋ₓMnₓO₂ (where 0<x<1), LiNi_{1-x-y}CoₓMn_{y}O₂ (where 0≤x≤0.5 and 0≤y≤0.5), LiFeO₂, V₂O₅, TiS, or MoS.

In some embodiments, the conducting agent, the binder, and the solvent used in the cathode active material composition may be the same as those used in the anode active material composition. In one or more embodiments, a plasticizer may be further added to the cathode active material composition and/or the anode active material composition to obtain electrode plates including pores.

The amounts of the cathode active material, the conducting agent, the binder as a common binder, and the solvent may be in ranges that are commonly used in lithium batteries. At least one of the conducting agent, the common binder, and the solvent may be omitted according to the use and the structure of the lithium battery.

The binder used in the preparation of the cathode electrode may be the same as a binder composition included in the coating layer of the separator.

Next, the separator according to any of the above-described embodiments may be disposed between the cathode and the anode.

In an electrode assembly including the cathode, the separator, and the anode, the separator between the cathode and the anode may include, as described above, a substrate and a coating layer on at least one surface of the substrate, wherein the coating layer includes first organic particles, second organic particles, and inorganic particles; an average particle diameter of the first organic particles is larger than an average particle diameter of the second organic particles and the inorganic particles; the first organic particles protrude to a height of about 0.1 µm to about 0.5 µm from a surface of the coating layer and are distributed on the surface of the coating layer in an area ratio of about 5 % or greater to about 15% or less with respect to a total surface area of the coating layer; and a weight ratio of the first and the second organic particles to the inorganic particles in the coating layer is in a range of about 20:80 to about 40:60.

The separator according to an embodiment may be prepared separately and then disposed between the cathode and the anode. In other embodiments, an electrode assembly including a cathode, the separator according to an embodiment, and an anode may be wound in a jelly roll type, which may then be put into a battery case or a pouch, and pre-charging while thermally softening under pressure. The charged jelly roll may be subjected to a formation process of charging and discharging under pressure, thereby completing the preparation of the separator. A detailed method of preparing a separator may refer to the above-described method of preparing a separator.

Next, an electrolyte may be prepared.

The electrolyte may be in a liquid or gel state.

For example, the electrolyte may be an organic electrolyte solution. Also, the electrolyte may be in a solid state. For example, the electrolyte may be boron oxide or lithium oxynitride, but embodiments are not limited thereto, and any material available as a solid electrolyte in the art may be used. In one or more embodiments, the solid electrolyte may be formed on the anode by, for example, sputtering.

For example, an organic electrolyte solution may be prepared. For example, the organic electrolyte solution may be prepared by dissolving a lithium salt in an organic solvent.

The organic solvent may be any solvent available as an organic solvent in the art. For example, the organic solvent may be propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, ethyl propionate, propyl propionate, benzonitrile, acetonitrile, tetrahydrofuran, 2-methyltetrahydrofuran, γ-butyrolactone, dioxolane, 4-methyldioxolane, N,N-dimethyl formamide, dimethyl acetamide, dimethylsulfoxide, dioxane, 1,2-dimethoxyethane, sulfolane, dichloroethane, chlorobenzene, nitrobenzene, diethylene glycol, dimethyl ether, or a mixture thereof.

In one or more embodiments, the lithium salt may be any material available as a lithium salt in the art. For example, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are each independently a natural number), LiCI, Lil or a mixture thereof.

The lithium battery includes a cathode, an anode, and a separator. In some embodiments, the cathode, the anode, and the separator may be wound or folded in a jelly-roll type assembly, which may then be put into a battery case or a pouch. Then, an organic electrolyte solution may be injected into the battery case or the pouch, and sealed with a cap assembly 6, thereby completing the manufacture of the lithium battery. In some embodiments, the battery case may be a cylindrical type, a rectangular type, or a thin-film type. For example, the lithium battery may be a thin-film type battery. The lithium battery may be a lithium ion battery. In some embodiments, the lithium battery may be a lithium polymer battery.

In some embodiments, the separator may be disposed between the cathode and the anode to form a battery assembly. In some embodiments, the battery assembly may be stacked in a bi-cell structure or wound in a jelly-roll type assembly, and may then be impregnated with an organic electrolytic solution. The resultant assembly may be put into a pouch and sealed, thereby completing the manufacture of a lithium polymer battery.

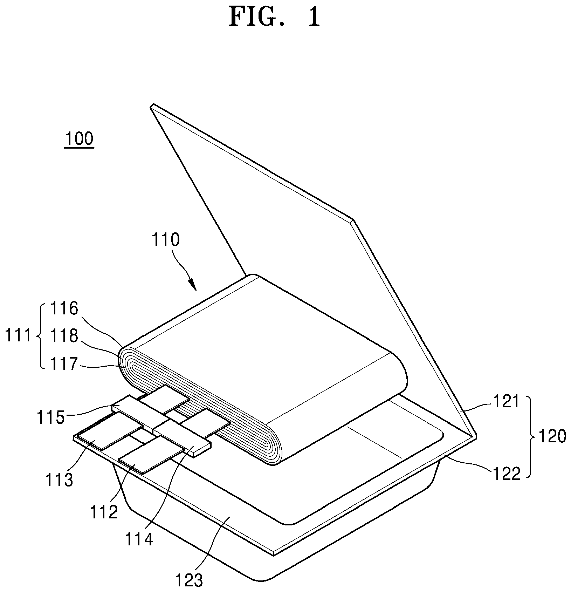

As shown in FIG. 1, a structure of a lithium secondary polymer battery 100, which is a pouch battery, may include an electrode assembly 110 and a case 120 that accommodates and seals the electrode assembly 110. The electrode assembly 110 may include a battery unit 111; and a cathode tab 112 and an anode tab 113 that are respectively connected to two electrodes of the battery unit 111.

The battery unit 111 may include a cathode plate 116; an anode plate 117; and a separator 118 disposed between the cathode plate 116 and the anode plate 117. The battery unit 111 may be assembled by disposing the separator 118 between the cathode plate 116 and the anode plate 117 and then winding the cathode plate 116, the separator 118, and the anode plate 117 together.

The cathode plate 116 of the battery unit 111 may be connected to the cathode tab 112, and the anode plate 117 may be connected to the anode tab 113, wherein the cathode tab 112 and the anode tab 113 are respectively connected to different corresponding external ports. Protection tapes 114 and 115 are respectively wound around the cathode tab 112 and the anode tab 113 to electrically insulate the cathode tab 112 and the anode tab 113 from the case 120.

The case 120 may include a lower case 122 that accommodates the battery unit 111; and an upper case 121 that seals a top surface of the lower case 122.

The upper and lower cases 121 and 122 may include a sealing portion 123 constructed with three edges. Although not shown in FIG. 1, after the battery unit 111 is inserted into the case 120 and then sealed, a composition for forming a polymer electrolyte is injected into the case 120, and then the resulting structure is optically or thermally treated, thereby completing the manufacture of the lithium polymer battery 100 including a polymer electrolyte.

In some embodiments, a plurality of electrode assemblies may be stacked to form a battery pack, which may be used in any device designed for high capacity and high output, for example, in a laptop computer, a smart phone, or an electric vehicle.

The lithium battery may have improved high rate characteristics and lifetime characteristics, and thus may be used in an electric vehicle (EV), for example, in a hybrid vehicle such as a plug-in hybrid electric vehicle (PHEV).

### MODE OF DISCLOSURE

One or more embodiments of the present disclosure will now be described in more detail with reference to the following examples. However, these examples are provided only for illustrative purposes, and are not intended to limit the scope of the present disclosure.

### (Preparation of separator)

### Preparation Example 1: 9 % by area ratio of first organic particles with respect to total surface area of coating layer

23 parts by weight of cross-linked polymethylmethacylate (PMMA, available from Nippon Shokubai) having an average particle diameter (D50) of about 0.25 µm as second organic particles, 65 parts by weight of boehmite (AIOOH, available from Nabaltec) having an average particle diameter (D50) of about 0.7 µm as inorganic particles, and 12 parts by weight of polystyrene having an average particle diameter (D50) of about 0.5 µm as first organic particles were mixed together to prepare a slurry for forming a coating layer. A degree of swelling of the first organic particles was about 800 % when left in an electrolyte solution at about 60 °C for about 72 hours, and the second organic particles was a degree of swelling of less than about 110 %.

The slurry for forming a coating layer was gravure coated on both surfaces of a polyethylene porous substrate having a thickness of about 7.5 µm and an air permeation time of about 115 sec to form a coating layer including a blend of the first organic particles, the second organic particles, and the inorganic particles on each of the surfaces of the porous substrate, each coating layer having a thickness of about 3.0 µm, thereby forming a separator. A thickness of the coating layer was about 1.5 µm with respect to one of the surfaces. A thickness of the separator was about 10.5 µm. Here, the time elapsed to flow 100 cc of air through the polyethylene porous separator was about 145 seconds, and a breakdown voltages (BDV) of the separator was about 1.253 kV.

### Preparation Example 2: 5 % by area ratio of first organic particles with respect to total surface area of coating layer

A separator was prepared in the same manner as in Preparation Example 1, except that 8 parts by weight of the second organic particles, 80 parts by weight of the inorganic particles, and 12 parts by weight of the first organic particles were mixed.

### Preparation Example 3: 15 % by area ratio of first organic particles with respect to total surface area of coating layer

A separator was prepared in the same manner as in Preparation Example 1, except that 10 parts by weight of the second organic particles, 67 parts by weight of the inorganic particles, and 23 parts by weight of the first organic particles were mixed.

### Preparation Example 4: Using boehmite having an average particle diameter of about 0.4 µm as inorganic particles

A separator was prepared in the same manner as in Preparation Example 1, except that boehmite having an average particle diameter (D50) of about 0.4 µm was used as the inorganic particles.

### Preparation Example 5: Using second organic particles of core-shell structure

A separator was prepared in the same manner as in Preparation Example 1, except that the second organic particles having a core-shell structure including a shell melting at 135 °C were used.

### Comparative Preparation Example 1: Not including inorganic particles

A separator was prepared in the same manner as in Preparation Example 1, except that 80 parts by weight of the second organic particles and 20 parts by weight of the first organic particles were mixed.

### Comparative Preparation Example 2: Not including second organic particles

A separator was prepared in the same manner as in Preparation Example 1, except that 80 parts by weight of the inorganic particles and 20 parts by weight of the first organic particles were mixed.

### Comparative Preparation Example 3: Not including first organic particles

A separator was prepared in the same manner as in Preparation Example 1, except that 20 parts by weight of the second organic particles and 80 parts by weight of the inorganic particles were mixed.

### Comparative Preparation Example 4: 20 % by area ratio of first organic particles with respect to total surface area of coating layer

A separator was prepared in the same manner as in Preparation Example 1, except that 20 parts by weight of the second organic particles, 50 parts by weight of the inorganic particles, 30 parts by weight of the first organic particles were mixed.

### (Preparation of lithium battery)

### Example 1

### (Preparation of anode)

97 weight% (wt%) of graphite particles having an average particle diameter of about 25 µm (C1SR, available from Nippon Carbon), 1.5 wt% of a styrenebutadiene rubber (SBR) binder (available from Zeon), and 1.5 wt% of carboxymethylcellulose (CMC, available from NIPPON A&L) were mixed together, added to distilled water, and then agitated with a mechanical stirrer for about 60 minutes to thereby prepare an anode active material slurry. The slurry was coated on a copper current collector having a thickness of about 10 µm with a doctor blade, dried in a hot-air drier at about 100 °C for about 0.5 hours, dried further under vacuum at about 120 °C for about 4 hours, and then roll-pressed to manufacture an anode plate.

### (Preparation of cathode)

97 wt% of LiCoO₂, 1.5 wt% of carbon black powder as a conducting agent, and 1.5 wt% of polyvinylidene fluoride (PVdF, available from SOLVAY) were mixed together, added to N-methyl-2-pyrrolidone solvent, and then agitated with a mechanical stirrer for about 30 minutes to thereby prepare a cathode active material slurry. The slurry was coated on an aluminum current collector having a thickness of about 20 µm with a doctor blade, dried in a hot-air drier at about 100 °C for about 0.5 hours, dried further under vacuum at about 120 °C for about 4 hours, and then roll-pressed to manufacture a cathode plate.

### (Electrode assembly jelly roll)

The separator prepared in Preparation Example 1 was positioned between the cathode plate and the anode plate, and then wound to form an electrode assembly in the form of a jelly roll. The jelly roll was put into a pouch. After an electrolyte solution was injected into the pouch, the pouch was vaccum-sealed.

The electrolyte solution was prepared by dissolving 1.3 M of LiPF₆ in a mixed solvent including ethylene carbonate (EC), ethylmethyl carbonate (EMC), and diethyl carbonate (DEC) in a volume ratio of 2:4:4.

While thermally softening the jelly roll in the pouch at about 70 °C under a pressure of about 250 kgf/cm² for about 1 hour, the jelly roll was pre-charged to about 70 % state of charge (SOC).

Then, after degassing the pouch, the jelly roll was charged with a constant current of about 0.2 C rate at about 45 °C under a pressure of about 200 kgf/cm² for about 1 hour up to a voltage of about 4.3 V, and then charged with a constant voltage while maintaining a voltage of about 4.3 V to a cutoff current of about 0.05 C. Subsequently, the jelly roll was discharged with a constant current of about 0.2 C up to a voltage of about 3.0 V during discharging, and this charge and discharge cycle was repeated 5 times to complete a formation process.

### Examples 2 to 5

Lithium batteries were prepared in the same manner as in Example 1, except that the separators prepared in Preparation Examples 2 to 5 were used, respectively.

### Comparative Examples 1 to 4

Lithium batteries were prepared in the same manner as in Example 1, except that the separators prepared in Comparative Preparation Examples 1 to 4 were used, respectively.

### Evaluation Example 1: Measurement of surface morphology of separator

Surface and cross-section images of the separator prepared in Preparation Example 1 were analyzed by scanning electron microscopy (SEM), and the results are shown in FIGS. 3 and 4.

Referring to FIGS. 3 and 4, the first organic particles were found to protrude from the surface of the separator in embossed form.

Also, morphological characteristics of the coating layer of each of the separators prepared in Preparation Examples 1 to 5 and Comparative Preparation Examples 1 to 4 were analyzed by SEM, and the results are shown in Table 1.

**Table 1**

| | Area ratio of first organic particles (%) | Number of first organic particles per area (Area: 13 µm×9 µm) |
|---|---|---|
| Preparation Example 1 | 9% | 53 |
| Preparation Example 2 | 5% | 30 |
| Preparation Example 3 | 15% | 86 |
| Preparation Example 4 | 9% | 51 |
| Preparation Example 5 | 9% | 52 |
| Comparative Preparation Example 1 | 14% | 79 |
| Comparative Preparation Example 2 | 16% | 89 |
| Comparative Preparation Example 3 | - | - |
| Comparative Preparation Example 4 | 20% | 116 |

Referring to Table 1, in the separators of Preparation Examples 1 to 3 including first organic particles, second organic particles, and inorganic particles, an area ratio of the first organic particles was found to be about 9 %, about 5 %, and about 15 %, respectively, with respect to the total surface area of the coating layer. Here, the number of the first organic particles per unit area (13 µm×9 µm) was found to be 53, 30, and 86, respectively, in the separators of Preparation Examples 1 to 3. Also, in the separators of Preparation Examples 4 and 5, an area ratio of the first organic particles of the both separators was found to be about 9 % with respect to the total surface area of the coating layer.

On the other hand, in the separator of Comparative Preparation Example 4, an area ratio of the first organic particles was found to be about 20 % with respect to the total surface of the coating layer, and the number of the first organic particles per unit area (13 µm×9 µm) was found to be 116.

### Evaluation Example 2: Evaluation of heat resistance of separator

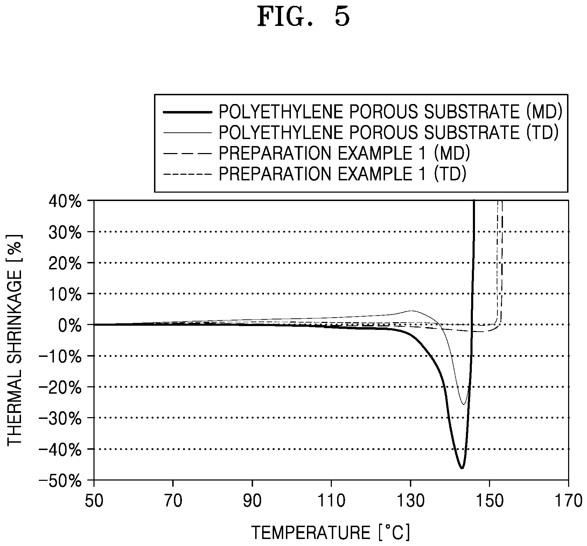

Thermal shrinkages (%) of the separator of Preparation Example 1 and a polyethylene porous substrate having a thickness of about 7.5 µm were measured using a thermomechanical analysis (TMA) in a machine direction (MD) and a transverse direction (TD) according to temperature increase, and the results are shown in FIG. 5. Q400 available from TA was used, the measurement was performed under the conditions of a sample size of about 5 mm, a measurement load of about 0.015 N, and a temperature increase rate of about 5 °C/min.

Referring to FIG. 5, a thermal shrinkage of the separator of Preparation Example 1 including first organic particles, second organic particles, and inorganic particles was found to be suppressed compared to that of the polyethylene porous substrate in both the MD and TD directions.

Also, thermal shrinkages of the separators prepared in Preparation Examples 1 to 5 and Comparative Preparation Examples 1 to 4 were measured in the same manner as in the measurement method, and the results are shown in Table 2.

### Evaluation Example 3: Evaluation of shut down and melt down characteristics of separator

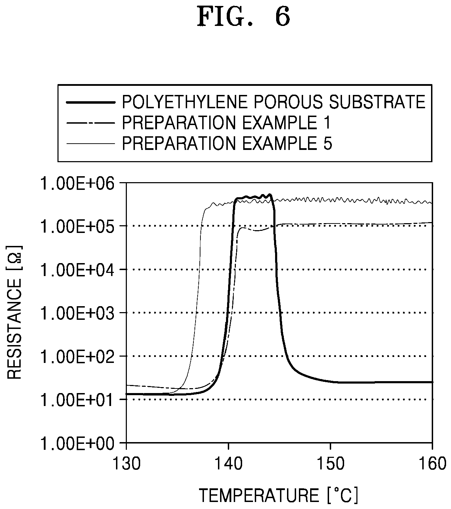

Shut down and melt down characteristics of the separators of Preparation Examples 1 and 5 and a polyethylene porous substrate having a thickness of about 7.5 µm were measured, and the results are shown in FIG. 6.

Referring to FIG. 6, shut down of the separator of Preparation Example 5 including second organic particles having a core-shell structure including a shell melting at about 135 °C was started to be observed from about 135 °C. Also, the separators of Preparation Examples 1 and Preparation Example 5 including first organic particles, second organic particles, and inorganic particles had excellent heat resistance characteristics with respect to a polyethylene porous substrate, and thus melt down did not occur in the separators.

### Evaluation Example 4: Evaluation of insulating properties of separator

BDVs of the separators of Preparation Examples 1 to 5 and Comparative Preparation Examples 1 to 4 were evaluated, and the results are shown in Table 2. Here, the BDV evaluation was performed using a TOS5301 (available from KIKISUI) while applying an increasing voltage to 0.3 kV over 8 seconds at a constant current of 0.3 mA (AC mode) to each separator placed between SUS plates, to thereby measure a voltage at a short point, at which the voltage increase (ramp) was stopped.

### Evaluation Example 5: Evaluation of air permeability of separator

The separator was removed from each pouch of the lithium batteries prepared in Examples 1 to 5 and Comparative Examples 1 to 4 underwent the formation process, and the air permeability of the separator was measured. The results are shown in Table 2. Here, the air permeability was measured as the time (in seconds) it takes for 100 cc of air to pass through each separator, using a measurement equipment (EG01 -55-1 MR, available from ASAHI SEIKIO).

### Evaluation Example 6: Evaluation of film resistance and adhesion of electrodes and separator

Film resistances and adhesions of the separators and electrodes with respect to the separators prepared in Preparation Examples 1 to 5 and Comparative Examples 1 to 4 were evaluated, and the results are shown in Table 2. Here, an electrode assembly having a stack of a release film/separator/electrodes was put into a pouch, and an electrolyte solution was injected to the pouch to measure film resistance and adhesion of the separator and electrodes. After degassing the pouch, the pouch was sealed, and a pressure of about 400 kgf/cm² at about 85 °C was applied to the pouch for about 3 minutes. The adhesion was measured using a universal testing machine (UTM).

**Table 2**

| | Heat resistance (Thermal shrinkage (%)) | | Insulating properties (BDV, kV) | Air permeabi lity (sec/100 cc) | Film resistance (Ω) | Adhesio n (N/m) |
|---|---|---|---|---|---|---|
| | MD | TD | | | | |
| Example 1 | 3 | 4 | 1.253 | 145 | 0.63 | 0.238 |
| Example 2 | 2 | 1 | 1.089 | 140 | 0.51 | 0.116 |
| Example 3 | 8 | 7 | 1.136 | 143 | 0.76 | 0.452 |
| Example 4 | 1 | 1 | 1.271 | 138 | 0.59 | 0.312 |
| Example 5 | 10 | 8 | 1.276 | 146 | 0.62 | 0.268 |
| Com parative Example 1 | 55 | 55 | 1.481 | 173 | 0.88 | 0.394 |
| Com parative Example 2 | 12 | 11 | 1.054 | 142 | 0.49 | 0.219 |
| Com parative Example 3 | 1 | 1 | 1.185 | 135 | 0.45 | - |
| Com parative Example 4 | 35 | 41 | 1.299 | 149 | 1.1 | 0.862 |

Referring to Table 2, the separators of Examples 1 to 5 including first organic particles, second particles, and inorganic particles had improved results in heat resistance, insulating properties, air permeability, film resistance, and adhesion, as compared with those of the separators of Comparative Examples 1 to 4.

On the other hand, the separators of Comparative Example 1 not including inorganic particles, Comparative Example 2 not including second organic particles, and Comparative Example 4 having an area ratio of first organic particles of 20 %, thermal shrinkages were large in both the MD and TD.

Also, the separator of Comparative Example 1 not including inorganic particles, the air permeability was not low, and the separator of Comparative Example 4 having an area ratio of first organic particles of 20 % had high film resistance and adhesion.

Also, an adhesion between the electrodes and the separator of Comparative Example 3 not including first organic particles was not measured.

As a result, in case of a separator according to an embodiment of the present disclosure, heat resistance, insulating properties, air permeability, film resistance, and adhesion of the separator were all excellent, as compared with those of a separator of the related art.

### Evaluation Example 7: Charge-discharge cycle characteristic evaluation

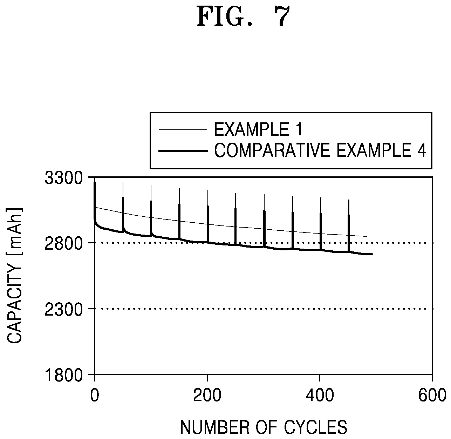

At a temperature of about 25 °C and a pressure of about 1 atm, the lithium batteries of Example 1 and Comparative Example 4 were subjected to charge-discharge cycles, in which each of the lithium batteries was charged at 0.2 C with a 4.4 V/0.02 C cutoff and then discharged at 0.2 C with a 2.75 V cutoff at the 1^{st}, 50^{th}, 100^{th}, 150^{th}, 200^{th}, 250^{th}, 300^{th}, 350^{th}, and 400^{th} cycles, and charged at 1 C with a 4.4 V/0.1 C cutoff and then discharged at 1 C with a 3 V cutoff on all other cycles. The results are shown in FIG. 7.

Referring to FIG. 7, the lithium battery of Example 1 having 9 % of the first organic particles with respect to the total surface area of the coating layer was found to have improved charge and discharge characteristics, as compared with that of the lithium battery of Comparative Example 4 having 20 % of the first organic particles with respect to the total surface area of the coating layer.

### INDUSTRIAL APPLICABILITY

According to an aspect one or more embodiments, when a separator including a coating layer having a novel structure is used in a lithium battery, the separator may have improved adhesion heat resistance with respect to electrodes, heat resistance, insulating properties, and air permeability, and lifetime characteristics of the lithium battery including the separator may be improved.

## Claims

1. A separator comprising:
a substrate and a coating layer disposed on at least one surface of the substrate,
wherein the coating layer comprises first organic particles, second organic particles, and inorganic particles;
an average particle diameter of the first organic particles is larger than an average particle diameter of the second organic particles and an average particle diameter of the inorganic particles;
the first organic particles protrude from a surface of the coating layer to a height of about 0.1 µm to about 0.5 µm and are distributed on the surface of the coating layer at an area ratio of about 5 % to about 15 % of a surface area of the coating layer; and
a weight ratio of the organic particles to the inorganic particles in the coating layer is in a range of about 20:80 to about 40:60.

2. The separator of claim 1, wherein an average particle diameter of the first organic particles is in a range of about 0.3 µm to about 0.7 µm.

3. The separator of claim 1, wherein a glass transition temperature (T_{g}) of the first organic particles is in a range of about 50 °C to about 70 °C.

4. The separator of claim 1, wherein the first organic particles comprise at least one selected from the group consisting of polystyrene, polyvinylidene fluoride, polymethyl methacrylate, polyacrylonitrile, polyvinylidene, polyvinyl acetate, polyethylene oxide, cellulose acetate, acrylate, and azodicarbonamide.

5. The separator of claim 1, wherein an average particle diameter of the second organic particles is in a range of about 0.15 µm to about 0.35 µm.

6. The separator of claim 1, wherein the second organic particles comprise cross-linked polystyrene or cross-linked polymethylmethacrylate.

7. The separator of claim 1, wherein the first organic particles or the second organic particles have a core-shell structure.

8. The separator of claim 1, wherein a weight ratio of the first organic particles to the second organic particles in the coating layer is in a range of about 30:70 to about 60:40.

9. The separator of claim 1, wherein an average particle diameter of the inorganic particles is in a range of about 0.2 µm to about 0.4 µm.

10. The separator of claim 1, wherein the inorganic particles comprise at least one selected from the group consisting of boehmite, alumina (Al₂O₃), BaSO₄, MgO, Mg(OH)₂, clay, silica (SiO₂), and TiO₂.

11. The separator of claim 1, wherein a thickness of the coating layer is in a range of about 0.3 µm to about 5.0 µm.

12. The separator of claim 1, wherein the coating layer further comprises third organic particles having a melting point (Tₘ) in a range of about 80 °C to about 130 °C.

13. The separator of claim 1, wherein the coating layer further comprises an aqueous binder.

14. A lithium battery comprising:
a cathode;
an anode; and
the separator of any one of claims 1 to 13 disposed between the cathode and the anode.

15. The lithium battery of claim 14, wherein the separator with respect to the anode has a peel strength in a range of about 0.01 N/m to about 3.0 N/m, an air permeability in a range of about 50 sec/100cc to about 300 sec/100cc, a breakdown voltage (BDV) in a range of about 0.5 kV to about 3.0 V, and a thermal shrinkage (%) of about 10 % or less in a temperature range of about 50 °C to about 150 °C.
